# EUROPEAN PATENT APPLICATION

(11) **EP 0 549 260 A2**
(43) Date of publication of application: **30.06.1993**
(21) Application number: 92311507.5
(22) Date of filing: 16.12.1992
(51) Int. Cl.: C08F 8/26

(54) **Process for improving biodegradability of PVC**

(30) Priority: 20.12.1991 US 811419
(71) Applicant: EXXON RESEARCH AND ENGINEERING COMPANY, Florham Park, New Jersey 07932-0390 (US)
(72) Inventor: Siskin, Michael, Morristown, New Jersey (US); Saleh, Ramzi Yanni, Flemington, New Jersey 08822 (US); Knudsen, George Andrew, Scotch Plains, New Jersey (US)
(74) Representative: Fletcher Watts, Susan J.

(57) **Abstract**

The present invention relates to a process for dehydrochlorinating polyvinylchloride by heating the starting materials PVC and neutral liquid water at temperatures from about 200°C up to the critical temperature of water at autogenous pressure. The process has utility in recycling by enabling PVC to be dechlorinated specifically by a means that does not release chlorine gas.

## Description

The present invention relates to a conversion process for removing chlorine from polyvinylchloride polymer resins ("PVC").

PVC resins find widespread use in industrial and construction applications. These polymers are not biodegradable and, thus, form an undesirable component of waste streams. In addition, the chlorine component of PVC forms a toxic, corrosive contaminant in many processes. Hence, it is desirable to have it removed or its effects neutralized so that the PVC may be processed more safely. A number of processes have been developed preparing partially dehydrochlorinated PVC. For example, U.S. Patent No. 4,423,193 is a process for producing graft copolymers from partially dehydrochlorinated PVC in an aqueous solution at from 150°C to 180°C. The reaction conditions are controlled so that not more than 3 wt.% chlorine is lost from the PVC, so that the partially dehydrochlorinated PVC may be used as a graft copolymer in further reactions. The process also requires the addition of other chemicals to prevent PVC agglomeration. By contrast, the process of applicants' invention is carried out at a higher temperature, at autogenous pressure, and, importantly, does not require that the dechlorination be limited to less than or equal to 3 wt.%. In fact, it is an object of the present invention to maximize the dehydrochlorination. Thus, removal of up to about 90% of the chlorine originally present in the PVC can be achieved in the process of the present invention. U.S. Patent 4,051,212 discloses a process for the continuous hydrolytic degradation of waste plastics in the presence of water at temperatures from 100°C to 300°C and pressures from 5 to 100 bars. However, the waste plastics on which the process operates are defined as "hydrolytically degradable waste plastics", such as polyurethanes, polyesters, polycarbonates and polyamides; that is, waste plastics in which the polymer backbone itself is degradable by hydrolysis. The PVC backbone, by contrast, is not hydrolyzable and, therefore, PVC are not within the scope of U.S. Patent 4,051,212.

U.S. Patent 3,826,789 requires the presence of one or more basic inorganic materials in order to dehydrochlorinate PVC. Applicants' process uses liquid water as the essential element; although bases may be present, particularly to neutralize the resulting HCl, such bases are, however, not required for the actual dehydrochlorination process.

The present invention provides a process for removing chlorine from ("dehydrochlorinating") PVC using liquid water. The polymers are selected from homopolymers of polyvinylchloride, and copolymers of vinylchloride. By contacting the starting materials of PVC and liquid water, preferably neutral water, at a temperature from about 200°C up to the critical temperature of water, more preferably from about 200°C to about 350°C for a time sufficient to remove the chlorine from the PVC, typically from about 1/2 hour to about 6 hours, at the corresponding pressure generated at the particular reaction temperature at autogenous pressure, which typically for water will be from about 225.45 psi at 200°C to about 2397.9 psi, at 350°C depending on the temperature of the system. The process has utility as a means for dehydrochlorinating and, thus, rendering more environmentally benign, a plastic that is currently a major component of the plastics waste stream and not biodegradable.

The process of the present invention is used to convert PVC to carbonaceous materials having decreased chlorine content wherein such conversion preferably removes up to about 90 wt.% of the chlorine. These carbonaceous materials are more easily degradable and compatible with subsequent processing.

The PVC that may be dehydrochlorinated by the process of the present invention are made by the suspension polymerization process, which is well known to one having skill in the art (see Schildknecht, "Vinyl and Related Polymers", John Wiley and Sons, Inc., New York (1952)). They may also be obtained commercially or as a by-product from construction and industrial applications. The PVC may be obtained as finely divided particles. However, waste or scrap PVC is equally usable in the process of the present invention, provided that it is cut or otherwise decreased into pieces of a size that can be accommodated in the reaction vessel. It is preferred that the pieces be of sufficiently small in size to be capable of forming a suspension in the water. The PVC polymers may also contain plasticizers which can be hydrolyzed during the process of the present invention.

The starting materials, PVC and liquid water, are contacted and heated at a temperature from about 200°C to the critical temperature of water, which is about 374°C, preferably from about 200°C to about 350°C, more preferably from about 225°C to about 325°C. The contacting is carried out at autogenous pressure (i.e., the combined vapor pressure that is generated by the mixed components of the system at the particular reaction temperature), which typically, for liquid water alone will be from about 225.45 psi at 200°C to about 2397.79 psi at 350°C. Pressures of liquid water at various temperatures within the above temperature range can readily be determined by one having ordinary skill in the art from standard reference texts. See, e.g., CRC Handbook of Chemistry and Physics, 6lst Edition, p. D-197 (1980-1981). The contacting is carried out for a time sufficient to dehydrochlorinate the PVC; such time is typically from about 1/2 hour to about 6 hours. The process may be carried out using neutral water or deoxygenated water as a starting material. Applicants have found that the use of deoxygenated water can minimize undesirable side reactions. Although the process of the present invention may be carried out such that any amount of chlorine up to about 90 wt.% of chlorine is removed, it is generally more desirable to remove greater rather than smaller amounts of chlorine. Thus, typically, a chlorine removal of from about 30 wt.% to about 90 wt.%, more preferably 50 wt.% to about 90 wt.%, most preferably, 70 wt.% to about 90 wt.% from the starting sample of PVC can be achieved. The result is thus an organic high molecular weight compound containing mainly C, H and O.

In the process of the present invention, chlorine is removed as HCl; that is, HCl is produced as a by-product. It is present in the aqueous phase, while the dehydrochlorinated PVC is present as a separate, solid phase. The HCl is present in a form that may be neutralized and/or easily separated from the dehydrochlorinated PVC by any conventional method known to one having ordinary skill in the art. The dehydrochlorination process may be operated continuously or in batch. Many PVC contain significant levels of plasticizers that also undergo hydrolysis in hot water to carboxylic acids and alcohols which also may be separated and recycled.

The process of the present invention produces dehydrochlorinated hydrocarbon that is useful as a feedstock for generation of lighter hydrocarbons, particularly because much of the chlorine has been removed into the liquid water phase rather than as chlorine gas.

The invention will be further understood, but not limited, by the following examples.

### Example 1

A 0.5 g sample of polyvinylchloride powder and 5 g of deoxygenated neutral liquid water as starting materials were heated in a sealed mini reactor (11 ml volume) at 315°C for 1 hour. At the end of the experiment, the reaction vessel contained an aqueous layer of HCl and a fluffy, porous, black residue that contained 38.5 wt.% C, 7.4 wt.% H, 5.7 wt.% Cl, and 48.4 wt.% oxygen (by difference) indicating that 90 wt.% of the chlorine was removed from the PVC.

### Example 2

The process of Example 1 was repeated at 250°C for 2 hours yielding a product that contained 79.9 wt.% C, 7.34 wt.% H, 8.07 wt.% Cl, and 4.7 wt.% oxygen (by difference) indicating that 86% of chlorine was removed.

## Claims

1. A process for decreasing the chlorine content of PVC polymer, comprising: contacting the starting materials of PVC and liquid water at a temperature of from about 200°C up to the critical temperature of water at autogenous pressure for a time sufficient to remove chlorine from the PVC.

2. The process of claim 1 wherein the contacting is at a temperature from about 200°C to about 350°C.

3. The process of claim 1 wherein the contacting is at a temperature from about 225°C to about 325°C.

4. The process of any preceding claim wherein the contacting is carried out for a time from about 1/2 hour to about 6 hours.

5. The process of any of claims 1 to 4 wherein dehydrochlorinating results in removal of from about 30 wt.% to about 90 wt.% of chlorine from PVC.

6. The process of any of claims 1 to 4 wherein dehydrochlorinating results in removal of from about 70 wt.% to about 90 wt.% of chlorine from PVC.

7. The process of any preceding claim wherein the chlorine is removed as HCl.

8. The process of any preceding claim wherein the liquid water starting material is neutral.
